# EUROPEAN PATENT SPECIFICATION

(11) **EP 3 326 781 B1**
(45) Date of publication and mention of the grant of the patent: **15.04.2020**
(21) Application number: 17203638.6
(22) Date of filing: 24.11.2017
(51) Int. Cl.: B29C 49/48

(54) **APPARATUS FOR FORMING PLASTIC FUEL TANK FOR VEHICLE**
VORRICHTUNG ZUR HERSTELLUNG EINES KUNSTSTOFF-KRAFTSTOFFTANKS FÜR EIN FAHRZEUG
APPAREIL DE FORMATION DE RÉSERVOIR DE CARBURANT EN MATIÈRE PLASTIQUE POUR VÉHICULE

(30) Priority: 29.11.2016 KR 20160160654
(43) Date of publication of application: 30.05.2018
(73) Proprietor: Dong Hee Industrial Co., Ltd., Ulsan 44784 (KR)
(72) Inventor: YOO, Jung Keun, Chungcheongnam-do 31164 (KR)
(74) Representative: Potter Clarkson

(56) References cited:
- WO-A1-2010/006900
- JP-A- S63 128 929
- JP-A- 2006 103 116

## Description

### BACKGROUND OF THE INVENTION

The present application claims priority to Korean Patent Application No. 10-2016-0160654, filed November 29, 2016, the entire contents of which is incorporated herein for all purposes by this reference.

### Field of the Invention

The present invention relates generally to an apparatus for molding a plastic fuel tank. More particularly, the present invention relates to an apparatus for forming a plastic fuel tank using a parison, the apparatus being capable of realizing uniform cross-sectional thickness of a formed plastic fuel tank.

### Description of the Related Art

In general, an engine of a vehicle is a device that converts thermal energy into mechanical rotational force by rotating a crankshaft using an explosive force generated by burning fuel in a combustion chamber.

In such an engine, fuel to be burned in the combustion chamber must be continuously supplied thereto, and a fuel tank storing a certain amount of fuel is provided in the vehicle for continuous supply of the fuel.

The fuel tank is usually made of steel or plastic. In recent years, however, a plastic fuel tank has been increasingly used for weight reduction and fuel mileage improvement.

The plastic fuel tank is manufactured through a melting process, an extrusion process, and a forming process. The melting process is a process of melting a plastic material by applying high temperature heat to obtain a molten resin. The extrusion process is a process of extruding the molten resin into a C-shaped parison, a twin-sheet parison, a cylinder-shaped parison, etc. The forming process is a process of forming a parison in a shape of the fuel tank using a mold.

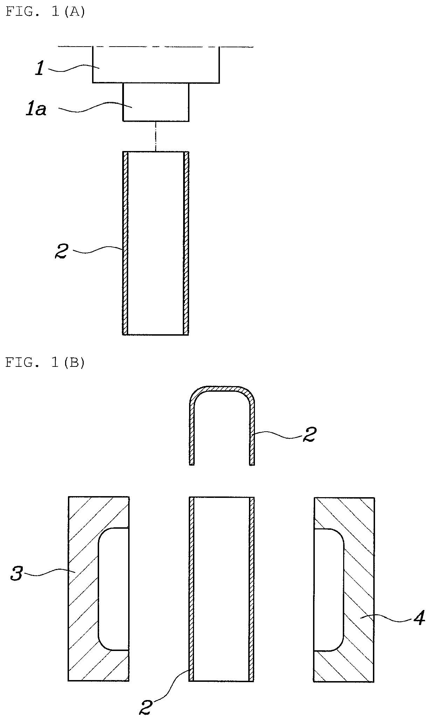

As an example of the forming process, there is a method using an intermediate mold, which will be described with reference to FIGS. 1(A) to (I).

When the plastic material is melted as a molten resin in a melting machine by high temperature heat, as shown in FIG. 1(A), the molten resin is extruded into a parison 2 having a certain shape through a head core 1a of an extruder. Then, as shown in FIG. 1(B), the extruded parison 2 is moved into a space defined between first and second molds 3 and 4.

Although the parison 2 having a C-shaped cross-section is shown as an example, it may be a twin-sheet parison.

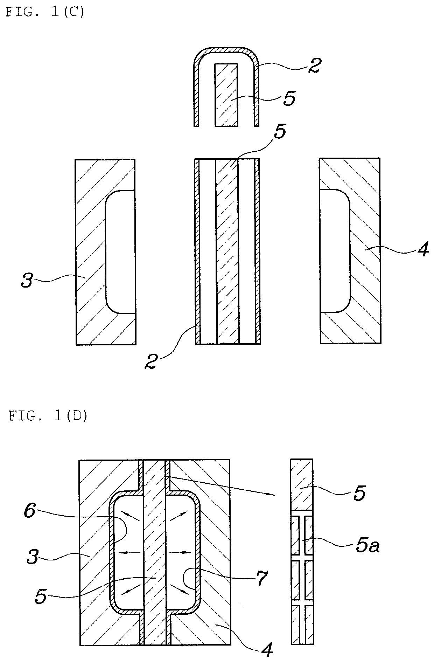

After the parison 2 is moved into the space defined between the first and second molds 3 and 4, as shown in FIG. 1(C), the intermediate mold 5 is inserted into the parison 2. Then, as shown in FIG. 1(D), the first and second molds 3 and 4 are combined and closed, and as the high-pressure air is discharged through the intermediate mold, the parison 2 is brought into contact with the surfaces of cavities of the first and second molds 3 and 4, whereby the parison is blow-molded into semi-finished products 6 and 7 having a shape of the fuel tank.

For blow molding of the parison 2, an air hole 5a is formed in the intermediate mold 5, and the air hole 5a has a structure connected to an externally located pneumatic device.

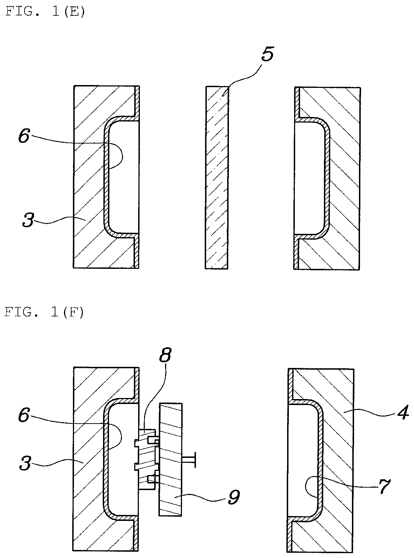

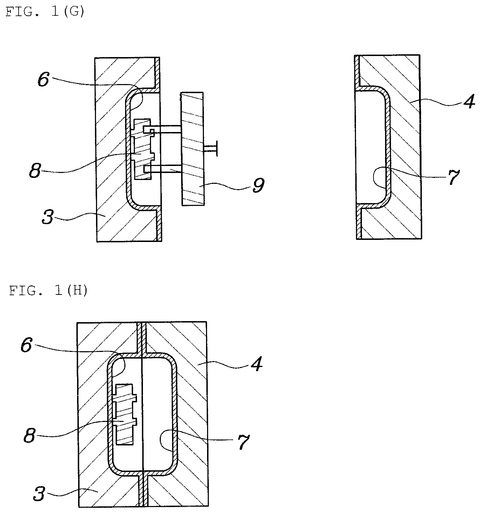

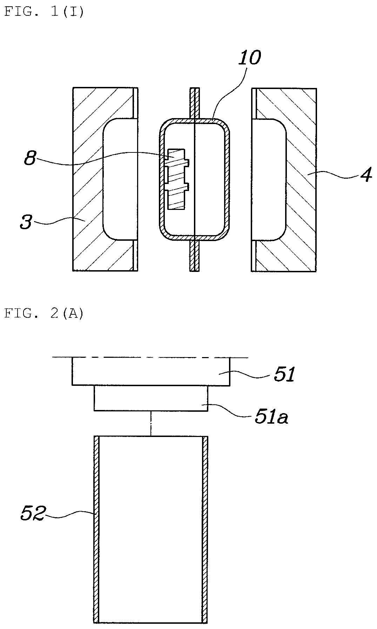

After the blow molding, as shown in FIG. 1(E), the combined first and second molds 3 and 4 are separated and opened, and the intermediate mold 5 is drawn out of the first and second molds 3 and 4. Then, as shown in FIG. 1(F), a gripper 9 to which a plastic part is clamped is inserted between the first and second molds 3 and 4, and joins the plastic part 8 onto the inside surface of the semi-finished product 6 by heat welding as shown in FIG. 1(G). Then, the gripper 9 is removed after the plastic part 8 and the semi-finished product 6 are joined together, and as shown in FIG. 1(H), the separated first and second molds 3 and 4 are combined again whereby the semi-finished products 6 and 7 are heat-welded together and the plastic fuel tank 10 is finally manufactured as shown in FIG. 1(I).

However, the plastic fuel tank 10 manufactured as described above is problematic in that dimension in the cross-sectional thickness is not uniform, and this non-uniformity of the cross-sectional thickness causes durability and quality problems.

In other words, the conventional apparatus provides high-pressure air to the parison 2 using the intermediate mold 5, whereby the parison 2 is blow-molded into the semi-finished products 6 and 7 having a shape of the fuel tank. However, it is difficult to control pressure of air discharged to the parison 2 to act evenly over the entire area of the parison 2. As a result, since the cross-section thickness of the semi-finished products 6 and 7 manufactured by blow molding is not uniform over the entire area, the finally manufactured plastic fuel tank 10 has non-uniform dimension in the cross-sectional thickness, and thus durability and quality problems occur due to the non-uniformity of the cross-sectional thickness.

### Related Art Documents

JP S63 128929 A
JP 2006 103116 A
WO 2010/006900 A1

JP S63 128929 A discloses a blow-molding apparatus relating to the preamble of Claim 1 hereof.

JP 2006 103116 A discloses a blow-molding apparatus comprising an inner mold which is covered by a parison and two outer molds. The parison is expanded via blow-molding to form the shape of a blow-molded article.

WO 2010/006900 A1 discloses a process for manufacturing a plastic fuel tank comprising two cavities and a core, the said process comprising mounting a component around a needle attached to the core so as to deform and pierce a parison.

The foregoing is intended merely to aid in the understanding of the background of the present invention, and is not intended to mean that the present invention falls within the purview of the related art that is already known to those skilled in the art.

### SUMMARY OF THE INVENTION

Accordingly, the present invention has been made keeping in mind the above problems occurring in the related art, and the present invention provides an apparatus for forming a plastic fuel tank for a vehicle, wherein when a parison is formed into semi-finished products having a shape of the fuel tank, the semi-finished products are manufactured by press forming using molds and an intermediate mold instead of blow molding, whereby the manufactured semi-finished product has uniform cross-section thickness over the entire area. Accordingly, the manufactured plastic fuel tank has uniform dimension in the cross-sectional thickness, thereby realizing uniform cross-sectional thickness of the final product. As a result, the final product that is the manufactured plastic fuel tank has improved durability and improved quality.

In order to achieve the above object, according to one aspect of the present invention, there is provided an apparatus for forming a plastic fuel tank for a vehicle, the apparatus forming a parison into semi-finished products having a shape of the fuel tank and forming the semi-finished products into a finished plastic fuel tank, the apparatus including: first and second molds configured to be combined and separated from each other; and an intermediate mold configured to be inserted between and withdrawn from the first and second molds, wherein when the parison is formed into the semi-finished products, the intermediate mold is positioned inside the parison and serves as a core, and when the first and second molds are combined, the first and second molds press an outer surface of the parison and the intermediate mold supports an inner surface of the parison, whereby the parison is formed into the semi-finished products, wherein the intermediate mold includes: a body portion inserted into cavities of the first and second molds when the first and second molds are combined; and a flange portion protruding outwardly from the body portion and positioned between the first and second molds at a position outside the cavities when the first and second molds are combined, and the apparatus being characterized by comprising a plurality of air passages provided at the first and second molds, and communicating with the cavities of the first and second molds; an air pump connected to the air passages through a plurality of air lines; and control valves provided on the air lines, respectively, and configured to allow the air passages and the air pump to be connected to each other and to allow the air passages and atmosphere to communicate with each other in accordance with control of a controller.

The body portion of the intermediate mold may have a rectangular-shaped cross section having round corners.

The body portion of the intermediate mold may be provided with a needle pin forming a hole at at least one of the semi-finished products and a plastic part heat-welded onto an inner surface of the semi-finished product; and the needle pin and the plastic part are placed inside the body portion of the intermediate mold until the parison is formed into the semi-finished products in a state in which the first and second molds are combined, and after the parison is formed into the semi-finished products in the state in which the first and second molds are combined, the needle pin and the plastic part protrude out of the body portion of the intermediate mold whereby the needle pin forms the hole at the semi-finished product and the plastic part is heat-welded onto the inner surface of the semi-finished product.

In a horizontal cross-section of the first and second molds, the air passages may include first passages passing through horizontal walls of the cavities, second passages passing through corners of the cavities, and third passages passing through vertical walls of the cavities.

In a first stage in which the intermediate mold is inserted into the parison before combining of the first and second molds begins and forming of the parison into the semi-finished products begins, the first, second, and third air passages may be connected to the atmosphere and serve as an air vent; in a second stage in which the combining of the first and second molds begins and the parison comes into contact with the first and second molds and the parison blocks openings of the cavities, the first, second, and third air passages may be connected to the air pump so that the cavities are vacuumized; in a third stage in which the combining of the first and second molds proceeds and the body portion of the intermediate mold and the parison are inserted into the cavities and the forming of the parison into the semi-finished products proceeds, the air passages of the first, second, and third air passages, which are sealed by the parison, communicate with the atmosphere and serve as the air vent, and the remaining air passages that remain unsealed by the parison are connected to the air pump and sustain the cavities to be vacuumized; and in a fourth stage in which the combining of the first and second molds is terminated and the forming of the parison into the semi-finished products is completed, the first, second, and third air passages may communicate with the atmosphere and serve as the air vent.

In the third stage, the first, second, and third air passages may be sealed by the parison in a sequence of the first, the third, and the second air passages.

According to the present invention, when the parison is formed into the semi-finished products having a shape of the fuel tank, the semi-finished products are manufactured by press forming using the first and second molds and the intermediate mold instead of blow molding, whereby the manufactured semi-finished products can have uniform cross-section thickness over the entire area. Accordingly, the manufactured plastic fuel tank can have uniform dimension in the cross-sectional thickness, thereby realizing uniform cross-sectional thickness of the final product. As a result, the final product that is the manufactured plastic fuel tank can have improved durability and improved quality.

### BRIEF DESCRIPTION OF THE DRAWINGS

The above and other objects, features and other advantages of the present invention will be more clearly understood from the following detailed description when taken in conjunction with the accompanying drawings, in which:
FIGS. 1(A) to 1(I) are views showing processes of forming a plastic fuel tank using a conventional forming apparatus;
FIGS. 2(A) to 2(I) are views showing processes of forming a plastic fuel tank using an apparatus for forming a plastic fuel tank for a vehicle according to the present invention; and
FIGS. 3 to 5 are views showing the apparatus according to the present invention.
FIGS. 6(A) to 6(D) are views showing the apparatus according to the present invention.

### DETAILED DESCRIPTION OF THE INVENTION

Hereinbelow, an apparatus for forming a plastic fuel tank for a vehicle according to exemplary embodiments of the present invention will be described in detail with reference to the accompanying drawings. Throughout the drawings, the same reference numerals will refer to the same or like parts.

FIGS. 2(A) to (I) shows a process of forming a plastic fuel tank using the apparatus according to the present invention.

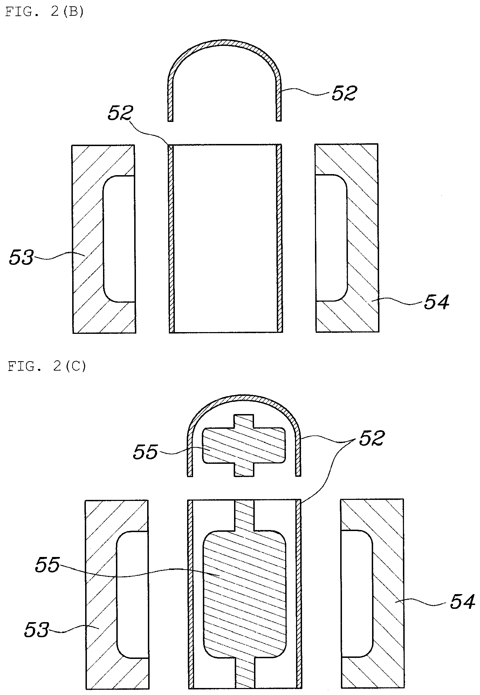

When a plastic material is melted into a molten resin by high temperature heat in a melting machine, as shown in FIG. 2(A), the molten resin is extruded into a parison 52 having a certain shape through a head core 51a of an extruder 51, and then as shown in FIG. 2(B), the extruded parison 52 is moved into a space defined between first and second molds 53 and 54.

Although the parison 52 having a C-shaped cross-section is shown as an example, it may be a twin-sheet parison.

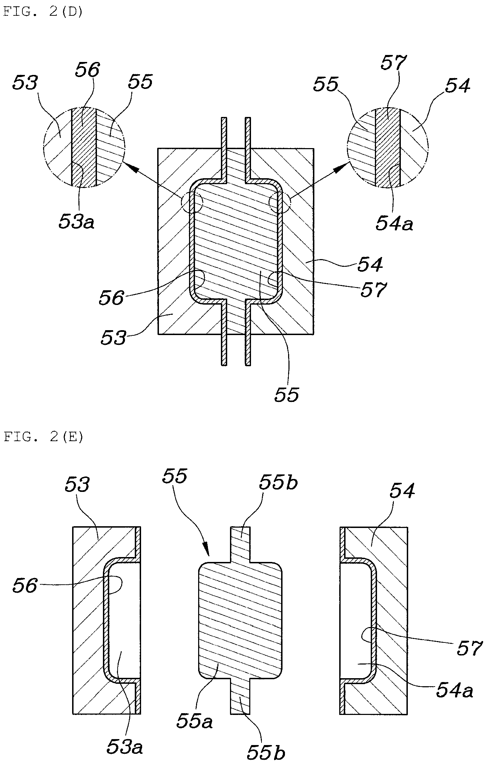

After the parison 52 is moved into the space defined between the first and second molds 53 and 54, as shown in FIG. 2(C), an intermediate mold 55 is inserted into the parison 52. Then, as shown in FIG. 2(D), the first and second molds 53 and 54 are combined and closed whereby the parison 52 is brought into contact with surfaces of cavities 53a and 54a of the first and second molds 53 and 54, and is formed into semi-finished products 56 and 57 having a shape of the fuel tank.

In other words, when the parison 52 is formed into the semi-finished products 56 and 57, the intermediate mold 55 is positioned inside the parison 52 and serves as a core. When the first and second molds 53 and 54 are combined, the first and second molds 53 and 54 press the outer surface of the parison 52 and the intermediate mold 55 supports the inner surface of the parison 52 whereby the parison 52 is formed into the semi-finished products 56 and 57.

A conventional apparatus for forming the parison into the semi-finished product employs blow molding in which high-pressure air discharged through the intermediate mold press the inner surface of the parison whereby the parison is formed into the semi-finished product. The semi-finished product manufactured by blow molding as described above is problematic in that the cross-sectional thickness of the semi-finished product is not uniform over the entire area, so the uniformity of the cross-sectional thickness is decreased. Accordingly, the manufactured plastic fuel tank has non-uniform dimension in the cross-sectional thickness, whereby durability and quality problems occur due to non-uniformity of the cross-sectional thickness.

However, the apparatus of the present invention is configured such that the intermediate mold 55 is positioned inside the parison 52 and serves as the core for supporting the parison 52 as in general press working, and when the first and second molds 53 and 54 are combined, the first and second molds 53 and 54 press the outer surface of the parison 52 and the intermediate mold 55 supports the inner surface of the parison 52 whereby the parison 52 is formed into the semi-finished products 56 and 57. The semi-finished products 56 and 57, which are formed in the same manner as the pressing working, have uniform cross-sectional thickness over the entire area and thus uniformity of the cross-sectional thickness is increased. Consequently, the manufactured plastic fuel tank has uniform dimension in the cross-sectional thickness, thereby significantly improving durability and quality.

The intermediate mold 55 includes a body portion 55a inserted into the cavities 53a and 54a of the first and second molds 53 and 54 when the first and second molds 53 and 54 are combined, and a flange portion 55b protruding outward from the body portion 55a, and positioned between the first and second molds 53 and 54 at a position outside the cavities 53a and 54a when the first and second molds 53 and 54 are combined, wherein the body portion 55a of the intermediate mold 55 has a rectangular-shaped cross section having round corners.

In the case of the semi-finished products 56 and 57 manufactured using the apparatus of the present invention, portions formed by the body portion 55a of the intermediate mold 55 become the plastic fuel tank and remaining portions formed by the flange portion 55b of the intermediate mold 55 becomes scrap, which will be cut and discarded in the following process.

Accordingly, in the case that the body portion 55a of the intermediate mold 55 has the rectangular-shaped cross section having round corners as in the present invention, the parison 52 can be more flexibly curved at the time of being formed into the semi-finished products 56 and 57, whereby the extension rate can be lowered. Consequently, it is possible to minimize a change in the cross-sectional thickness of the manufactured semi-finished products 56 and 57.

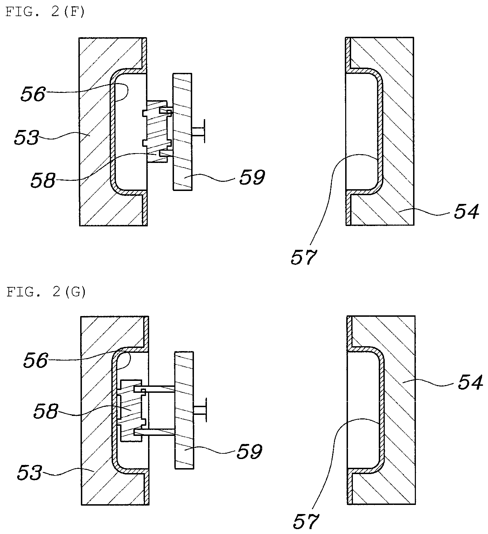

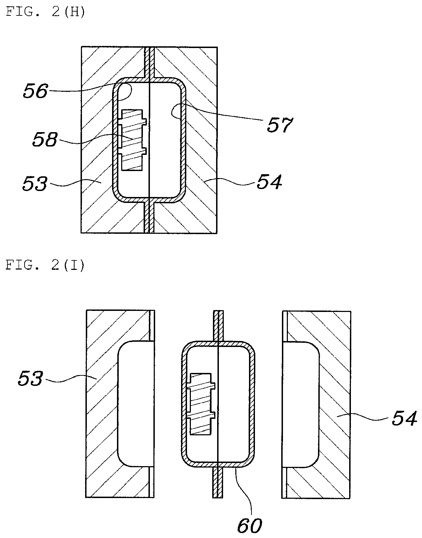

After forming the semi-finished products 56 and 57 as described above, as shown in FIG. 2(E), the combined first and second molds 53 and 54 are separated and opened, the intermediate mold 55 is drawn out of the first and second molds 53 and 54. Then, as shown in FIG. 2(F), the gripper 59 to which the plastic part 58 is clamped is inserted between the first and second molds 53 and 54 and joins the plastic part 58 onto the inner surface of the semi-finished product 56 by heat welding as shown in FIG. 2(G). The gripper 59 is drawn out of the molds after the plastic part 58 and the semi-finished products are joined together. Then, as shown in FIG. 2(H), as the first and second molds 53 and 54 are combined again, the semi-finished products 56 and 57 of the first and second molds 53 and 54 are heat-welded together, whereby the production of the fuel tank 60 is complete as shown in FIG. 2(I).

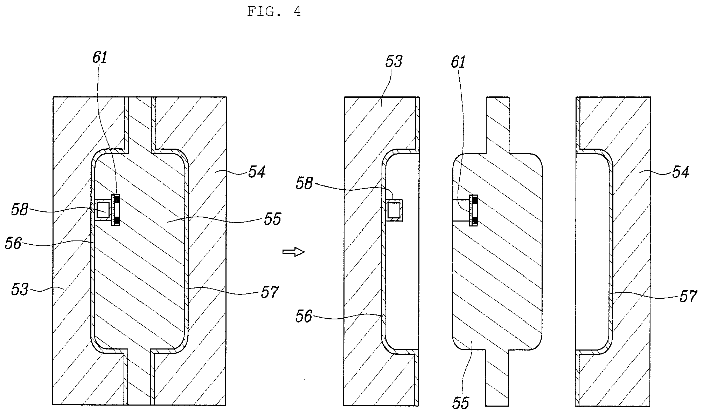

Meanwhile, as described above, the plastic part 58 can be heat-welded onto the inner surface of the semi-finished product 56 by using the gripper 59. However, as shown in FIG. 4, the plastic part 58 may be heat-welded onto the inner surface of the semi-finished product 56 by using an actuator 61 provided integrally with the intermediate mold 55.

In other words, as shown in FIG. 4, when the forming of the parison into the semi-finished products is completed in a state in which the parison 52 is moved into the space defined between the first and second molds 53 and 54, the intermediate mold 55 is inserted into the parison 52, the first and second molds 53 and 54 are combined, the plastic part 58 and the actuator 61 are located in the body portion 55a of the intermediate mold 55 until the forming of the parison 52 into the semi-finished products 56 and 57 is completed, and the first and second molds 53 and 54 are combined, the plastic part 58 protrudes out of the body portion 55a by operation of the actuator 61 and is heat-welded onto the inner surface of the semi-finished product 56.

The actuator 61 may be a pneumatic actuator, but is not limited thereto.

As described above, in the case that the intermediate mold 55 is provided with the actuator 61 for heat welding of the plastic part 58, there is no need for provision of the gripper 59. Accordingly, it is possible to reduce costs and significantly shorten the work cycle, thereby improving productivity.

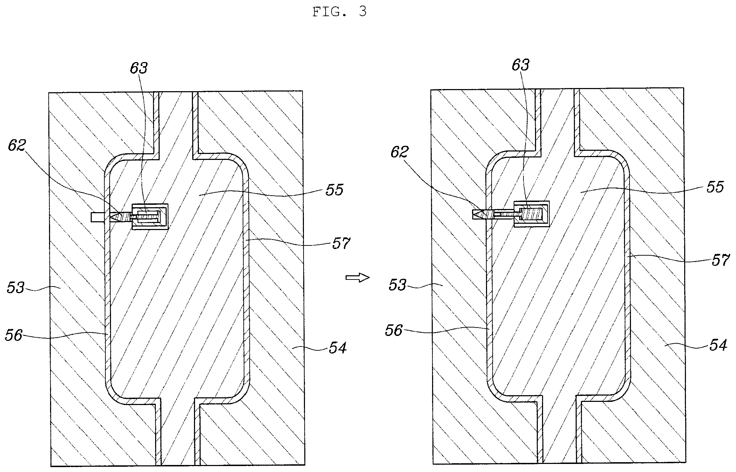

Further, as shown in FIG. 3, the intermediate mold 55 may further include an actuator 63 having a needle pin 62 forming a hole at the semi-finished product 56.

In other words, as shown in FIG. 3, when the forming of the parison into the semi-finished products 56 and 57 is completed in a state in which the parison 52 is moved into the space defined between the first and second molds 53 and 54, the intermediate mold 55 is inserted into the parison 52, the first and second molds 53 and 54 are combined, the needle pin 62 and the actuator 63 are located inside the body portion 55a of the intermediate mold 55 until the forming of the parison 52 into the semi-finished products 56 and 57 is completed, and the first and second molds 53 and 54 are combined, the needle pin 62 protrudes out of the body portion 55a by operation of the actuator 63 and forms the hole at a predetermined portion of the semi-finished product 56.

A separate plastic part is engaged to a hole formed in the semi-finished product 56.

The actuator 63 may be a pneumatic actuator, but is not limited thereto.

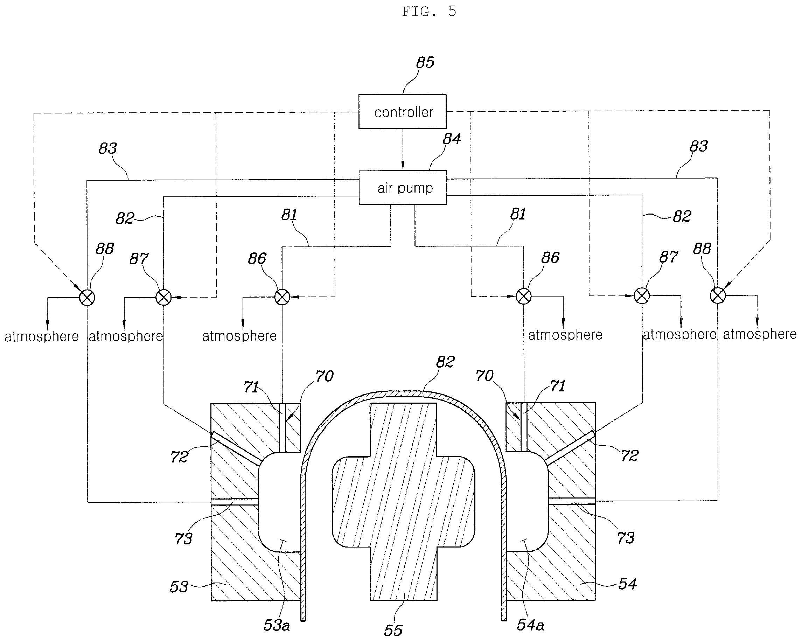

Further, as shown in FIG. 5, the present invention further includes: a plurality of air passages 70 provided at the first and second molds 53 and 54, and communicating with the cavities 53a and 54a of first and second molds 53 and 54; an air pump 84 connected to the air passages 70 through air lines 81, 82, and 83; and control valves 86, 87, and 88 provided on the air lines 81, 82, and 83, respectively, and configured to allow the air passages 70 and the air pump 84 to be connected to each other and to allow the air passages 70 and the atmosphere to communicate with each other in accordance with control of a controller 85.

In the horizontal cross-section of the first and second molds 53 and 54, the air passages 70 include first passages 71 passing through horizontal walls of the cavities 53a and 54a, second passages 72 passing through corners of the cavities, and third passages 73 passing through vertical walls of the cavities.

The air passages 70 are provided to improve formability when forming the parison 52 into the semi-finished products 56 and 57. The controller 85 controls operation of the control valves 86, 87, and 88 in accordance with forming steps, whereby air in the cavities 53a and 54a is discharged to the outside or spaces of the cavities 53a and 54a are vacuum sealed.

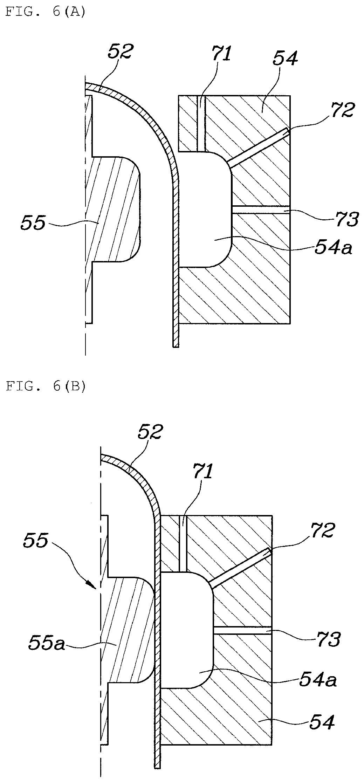

In other words, as shown in FIG. 6(A), in the first stage in which the intermediate mold 55 is inserted into the parison 52 before combining of the first and second molds 53 and 54 begins and forming of the parison 52 into the semi-finished products 56 and 57 begins, the first, second, and third air passages 71, 72, and 73 communicate with the atmosphere and serve as an air vent.

Then, as shown in FIG. 6(B), in a second stage the combining of the first and second molds 53 and 54 begins and the parison 52 comes into contact with the first and second molds 53 and 54 and the parison 52 blocks the openings of the cavities 53a and 54a, the first, second, and third air passages 71, 72, and 73 are connected to the air pump 84 whereby the cavities 53a and 54a are vacuumized. Accordingly, as the combining of the first and second molds 53 and 54 proceeds, the body portion 55a of the intermediate mold 55 and the parison 52 are more efficiently inserted into the cavities 53a and 54a.

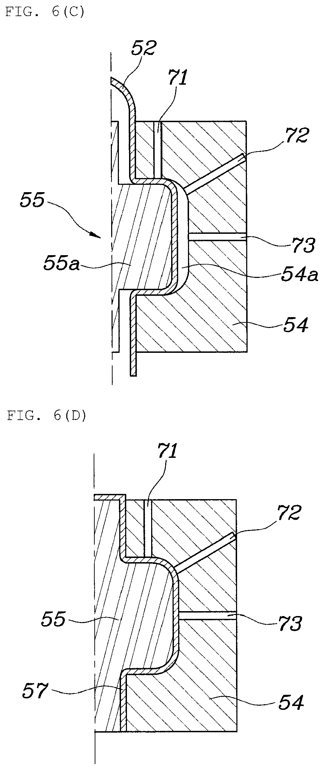

Thereafter, as shown in FIG. 6(C), in a third stage in which the combining of the first and second molds 53 and 54 proceeds continuously and the body portion 55a of the intermediate mold 55 and the parison 52 are inserted into the cavities 53a and 54a and the forming of the parison 52 into the semi-finished products 56 and 57 proceeds, the air passages 71 of the first, second, and third air passages 71, 72, and 73, which are sealed by the parison 52 communicate with the atmosphere and serve as an air vent, while the remaining air passages 72 and 73 that remain unsealed by the parison 52 are connected to the air pump 84 and sustain the cavities 53a and 54a to be vacuumized.

In the case that the first passages 71 sealed by the parison 52 communicate with the atmosphere and serve as an air vent, the body portion 55a of the intermediate mold 55 and the parison 52 are more efficiently inserted into the cavities 53a and 54a. In the case that the cavities 53a and 54a are maintained in the vacuum state by the second and third air passages 72 and 73 that remain unsealed by the parison 52, formability can be enhanced when the parison 52 is formed into the semi-finished products 56 and 57.

Finally, as shown in FIG. 6(D), in a fourth stage in which the combining of the first and second molds 53 and 54 is terminated and the forming of the parison 52 into the semi-finished products 56 and 57 is completed, the first, second, and third air passages 71, 72, and 73 are sealed by the parison 52 and communicate with the atmosphere to serve as an air vent.

Meanwhile, in the third stage, the first, second, third air passages 71, 72, and 73 are sealed by the parison 52 in a sequence of the first, the third, and the second air passages, which results from the characteristics of the corners of cavities 53a and 54a. Accordingly, air is allowed to remain ultimately in the corners of the cavities 53a and 54a, thereby enhancing formability when the parison is formed into the semi-finished products 56 and 57.

In the embodiment of the present invention as described above, when the parison 52 is formed into the semi-finished products 56 and 57 having a shape of the fuel tank, the semi-finished products 56 and 57 are manufactured by press forming using the first and second molds 53 and 54 and the intermediate mold 55 instead of blow molding. Consequently, the manufactured semi-finished products 56 and 57 can have uniform cross-sectional thickness over the entire area, and thus the manufactured plastic fuel tank 60 can have uniform dimension in the cross-sectional thickness, thereby realizing uniform cross-sectional thickness of the final product. As a result, it is possible to improve durability and quality of the final product that is the manufactured plastic fuel tank 60.

## Claims

1. An apparatus for forming a plastic fuel tank for a vehicle, the apparatus forming a parison into semi-finished products having a shape of the fuel tank and forming the semi-finished products into a finished plastic fuel tank, the apparatus comprising:
first and second molds configured to be combined and separated from each other; and
an intermediate mold configured to be inserted between and withdrawn from the first and second molds,
wherein when the parison is formed into the semi-finished products, the intermediate mold is positioned inside the parison and serves as a core, and when the first and second molds are combined, the first and second molds press an outer surface of the parison and the intermediate mold supports an inner surface of the parison, whereby the parison is formed into the semi-finished products,
wherein the intermediate mold includes:
a body portion inserted into cavities of the first and second molds when the first and second molds are combined; and
a flange portion protruding outwardly from the body portion and positioned between the first and second molds at a position outside the cavities when the first and second molds are combined, and
the apparatus being **characterised by** further comprising:
a plurality of air passages provided at the first and second molds, and communicating with the cavities of first and second molds;
an air pump connected to the air passages through a plurality of air lines; and
control valves provided on the air lines, respectively, and configured to allow the air passages and the air pump to be connected to each other and to allow the air passages and the atmosphere to communicate with each other in accordance with control of a controller.

2. The apparatus of claim 1, wherein the body portion of the intermediate mold has a rectangular-shaped cross section having round corners.

3. The apparatus of claim 1, wherein the body portion of the intermediate mold is provided with a needle pin forming a hole at at least one of the semi-finished products and a plastic part heat-welded onto an inner surface of the semi-finished product; and
the needle pin and the plastic part are placed inside the body portion of the intermediate mold until the parison is formed into the semi-finished products in a state in which the first and second molds are combined, and after the parison is formed into the semi-finished products in the state in which the first and second molds are combined, the needle pin and the plastic part protrude out of the body portion of the intermediate mold whereby the needle pin forms the hole at the semi-finished product and the plastic part is heat-welded onto the inner surface of the semi-finished product.

4. The apparatus of claim 1, wherein in a horizontal cross-section of the first and second molds, the air passages include first passages passing through horizontal walls of the cavities, second passages passing through corners of the cavities, and third passages passing through vertical walls of the cavities.

5. The apparatus of claim 4, wherein in a first stage in which the intermediate mold is inserted into the parison before combining of the first and second molds begins and forming of the parison into the semi-finished products begins, the first, second, and third air passages communicate with the atmosphere and serve as an air vent;
in a second stage in which the combining of the first and second molds begins and the parison comes into contact with the first and second molds and the parison blocks openings of the cavities, the first, second, and third air passages are connected to the air pump so that the cavities are vacuumized;
in a third stage in which the combining of the first and second molds proceeds and the body portion of the intermediate mold and the parison are inserted into the cavities and the forming of the parison into the semi-finished products proceeds, the air passages of the first, second, and third air passages, which are sealed by the parison, communicate with the atmosphere and serve as the air vent, and the remaining air passages that remain unsealed by the parison are connected to the air pump and sustain the cavities to be vacuumized; and
in a fourth stage in which the combining of the first and second molds is terminated and the forming of the parison into the semi-finished products is completed, the first, second, and third air passages communicate with the atmosphere and serve as the air vent.

6. The apparatus of claim 5, wherein in the third stage, the first, second, and third air passages are sealed by the parison in a sequence of the first, the third, and the second air passages.

## Patentansprüche

1. Vorrichtung zum Herstellen eines Kunststoffkraftstofftanks für ein Fahrzeug, wobei die Vorrichtung einen Vorformling zu Halbzeugen mit einer Form des Kraftstofftanks formt und die Halbzeuge zu einem fertigen Kunststoffkraftstofftank formt, wobei die Vorrichtung umfasst:
erste und zweite Formen, die so konfiguriert sind, dass sie kombiniert und voneinander getrennt werden; und
eine Zwischenform, die so konfiguriert ist, dass sie zwischen der ersten und der zweiten Form eingefügt und daraus entnommen wird,
wobei, wenn der Vorformling zu den Halbzeugen geformt wird, die Zwischenform innerhalb des Vorformlings positioniert ist und als Kern dient, und wenn die erste und die zweite Form kombiniert werden, die erste und die zweite Form eine Außenfläche des Vorformlings pressen und die Zwischenform eine Innenfläche des Vorformlings trägt, wodurch der Vorformling zu den Halbzeugen geformt wird,
wobei die Zwischenform beinhaltet:
einen Körperabschnitt, der in Hohlräume der ersten und der zweiten Form eingesetzt wird, wenn die erste und die zweite Form kombiniert werden; und
einen Flanschabschnitt, der von dem Körperabschnitt nach außen vorsteht und zwischen der ersten und der zweiten Form an einer Position außerhalb der Hohlräume positioniert ist, wenn die erste und die zweite Form kombiniert werden, und
wobei die Vorrichtung durch gekennzeichnet ist, dass sie ferner umfasst:
mehrere Luftkanäle, die an der ersten und der zweiten Form vorgesehen sind und mit den Hohlräumen der ersten und der zweiten Form in Verbindung stehen;
eine Luftpumpe, die über mehrere Luftleitungen mit den Luftkanälen verbunden ist; und
Steuerventile, die jeweils an den Luftleitungen vorgesehen und konfiguriert sind, um zu ermöglichen, dass die Luftkanäle und die Luftpumpe miteinander verbunden werden, und um zu ermöglichen, dass die Luftkanäle und die Atmosphäre in Übereinstimmung mit der Steuerung einer Steuerung miteinander kommunizieren.

2. Vorrichtung nach Anspruch 1, wobei der Körperabschnitt der Zwischenform einen rechteckförmigen Querschnitt mit runden Ecken aufweist.

3. Vorrichtung nach Anspruch 1, wobei der Körperabschnitt der Zwischenform mit einem Nadelstift versehen ist, um ein Loch in mindestens einem der Halbzeuge zu bilden, und mit einem Kunststoffteil, das an eine Innenfläche des Halbzeugs heißgeschweißt wird; und
der Nadelstift und das Kunststoffteil innerhalb des Körperabschnitts der Zwischenform platziert werden, bis der Vorformling in einem Zustand, in dem die erste und die zweite Form kombiniert sind, zu den Halbzeugen geformt wird, und nachdem der Vorformling zu Halbzeugen geformt wurde, in dem Zustand, in dem die erste und die zweite Form kombiniert sind, der Nadelstift und das Kunststoffteil aus dem Körperabschnitt der Zwischenform herausragen, wobei der Nadelstift das Loch am Halbzeug bildet und das Kunststoffteil auf die Innenfläche des Halbzeugs heißgeschweißt wird.

4. Vorrichtung nach Anspruch 1, wobei in einem horizontalen Querschnitt der ersten und der zweiten Form die Luftkanäle erste Durchgänge, die durch horizontale Wände der Hohlräume verlaufen, zweite Durchgänge, die durch Ecken der Hohlräume verlaufen, und dritte Durchgänge, die durch vertikale Wände der Hohlräume verlaufen, beinhalten.

5. Vorrichtung nach Anspruch 4, wobei in einer ersten Stufe, in der die Zwischenform in den Vorformling eingeführt wird, bevor das Kombinieren der ersten und der zweiten Form beginnt und die Formung des Vorformlings zu den Halbzeugen beginnt, der erste, der zweite und der dritte Luftkanal mit der Atmosphäre kommunizieren und als Entlüftungsöffnung dienen;
in einer zweiten Stufe, in der das Kombinieren der ersten und der zweiten Form beginnt und der Vorformling mit der ersten und der zweiten Form in Kontakt kommt und der Vorformling die Öffnungen der Hohlräume blockiert, der erste, der zweite und der dritte Luftkanal mit der Luftpumpe verbunden ist, so dass die Hohlräume vakuumiert werden;
in einer dritten Stufe, in der das Kombinieren der ersten und der zweiten Form fortschreitet und der Körperabschnitt der Zwischenform und der Vorformling in die Hohlräume eingeführt werden und die Formung des Vorformlings zu den Halbzeugen fortschreitet, die Luftkanäle der ersten, der zweiten und der dritten Luftkanäle, die durch den Vorformling abgedichtet werden, mit der Atmosphäre kommunizieren und als Entlüftungsöffnung dienen und die verbleibenden Luftkanäle, die durch den Vorformling nicht abgedichtet werden, mit der Luftpumpe verbunden sind und die Hohlräume weiterhin unter Vakuum halten; und
in einer vierten Stufe, in der das Kombinieren der ersten und zweiten Form beendet wird und die Formung des Vorformlings zu den Halbzeugen abgeschlossen ist, der erste, der zweite und der dritte Luftkanal mit der Atmosphäre kommunizieren und als Entlüftungsöffnung dienen.

6. Vorrichtung nach Anspruch 5, wobei in der dritten Stufe der erste, der zweite und der dritte Luftkanal durch den Vorformling in einer Abfolge des ersten, des dritten und des zweiten Luftkanals abgedichtet werden.

## Revendications

1. Appareil de formation d'un réservoir de carburant en matière plastique pour un véhicule, l'appareil formant une paraison à partir de produits semi-finis ayant la forme du réservoir de carburant, et formant un réservoir de carburant fini en plastique à partir des produits semi-finis, l'appareil comprenant :
des premier et second moules conçus pour être combinés et séparés l'un de l'autre ; et
un moule intermédiaire conçu pour être inséré entre les premier et second moules, et retiré de ceux-ci,
dans lequel, lorsque la paraison est formée à partir de produits semi-finis, le moule intermédiaire est positionné à l'intérieur de la paraison et sert de noyau, et, lorsque les premier et second moules sont combinés, les premier et second moules pressent une surface extérieure de la paraison et le moule intermédiaire supporte une surface intérieure de la paraison, la paraison étant ainsi formée à partir de produits semi-finis,
le moule intermédiaire comprenant :
une partie de corps insérée dans les cavités des premier et second moules lorsque les premier et second moules sont combinés ; et
une partie de rebord faisant saillie vers l'extérieur de la partie de corps et étant positionnée entre les premier et second moules dans une position à l'extérieur des cavités lorsque les premier et second moules sont combinés, et
l'appareil étant **caractérisé en ce qu'**il comprend en outre :
une pluralité de passages d'air prévus au niveau des premier et second moules, et communiquant avec les cavités des premier et second moules ;
une pompe à air connectée aux passages d'air à travers une pluralité de conduites d'air ; et
des vannes de commande prévues sur les conduites d'air, respectivement, et conçues pour permettre le raccordement des passages d'air et de la pompe à air entre eux, et pour permettre la communication entre les passages d'air et l'atmosphère, conformément à la commande d'un dispositif de commande.

2. Appareil selon la revendication 1, dans lequel la partie de corps du moule intermédiaire présente une section transversale de forme rectangulaire ayant des coins arrondis.

3. Appareil selon la revendication 1, dans lequel la partie de corps du moule intermédiaire est munie d'une broche formant aiguille formant un trou au niveau d'au moins un des produits semi-finis, et d'une pièce en plastique soudée à chaud sur une surface intérieure du produit semi-fini ; et dans lequel
la broche formant aiguille et la pièce en plastique sont placées à l'intérieur de la partie de corps du moule intermédiaire jusqu'à ce que la paraison soit formée à partir de produits semi-finis dans un état dans lequel les premier et second moules sont combinés, et après que la paraison est formée en semi-produits finis dans l'état dans lequel les premier et second moules sont combinés, la broche formant aiguille et la pièce en plastique dépassent de la partie de corps du moule intermédiaire, la broche formant aiguille formant ainsi le trou au niveau du produit semi-fini, et la pièce en plastique étant soudée à chaud sur la surface intérieure du produit semi-fini.

4. Appareil selon la revendication 1, dans lequel, dans une coupe horizontale des premier et second moules, les passages d'air comprennent des premiers passages traversant les parois horizontales des cavités, des deuxièmes passages traversant les coins des cavités et des troisièmes passages traversant les parois verticales des cavités.

5. Appareil selon la revendication 4, dans lequel, dans une première étape dans laquelle le moule intermédiaire est inséré dans la paraison avant le début de la combinaison des premier et second moules et avant le début de la formation de la paraison à partir de produits semi-finis, les premiers, les deuxièmes et les troisièmes passages d'air communiquent avec l'atmosphère et servent de conduit d'aération ;
dans une deuxième étape dans laquelle la combinaison des premier et second moules commence et la paraison entre en contact avec les premier et second moules, et la paraison bloque les ouvertures des cavités, les premiers, deuxièmes et troisièmes passages d'air sont raccordés à la pompe à air de sorte que les cavités soient évacuées ;
dans une troisième étape dans laquelle la combinaison des premier et second moules se déroule et la partie de corps du moule intermédiaire ainsi que la paraison sont insérées dans les cavités, et la formation de la paraison à partir de produits semi-finis se déroule, les passages d'air des premiers, deuxièmes et troisièmes passages d'air, lesquels sont scellés par la paraison, communiquent avec l'atmosphère et servent de conduit d'aération, et les passages d'air restants non scellés par la paraison sont raccordés à la pompe à air et soutiennent les cavités à évacuer ; et
dans une quatrième étape dans laquelle la combinaison des premier et second moules est terminée et la formation de la paraison à partir de produits semi-finis est terminée, les premiers, deuxièmes et troisièmes passages d'air communiquent avec l'atmosphère et servent de conduit d'aération.

6. Appareil selon la revendication 5, dans lequel à la troisième étape, les premiers, deuxièmes et troisièmes passages d'air sont scellés par la paraison, suivant une séquence des premiers, troisièmes et deuxièmes passages d'air.
